# EUROPÄISCHE PATENTSCHRIFT

(11) **EP 1 081 669 B1**
(45) Veröffentlichungstag und Bekanntmachung des Hinweises auf die Patenterteilung: **18.06.2008**
(21) Anmeldenummer: 00117233.7
(22) Anmeldetag: 14.08.2000
(51) Int. Cl.: G08G 1/0969, G01C 21/36

(54) **Anzeigeeinheit für ein Navigationssystem**
Display for a navigation system
Affichage pour un système de navigation

(30) Priorität: 03.09.1999 DE 19941961
(43) Veröffentlichungstag der Anmeldung: 07.03.2001
(73) Patentinhaber: Volkswagen Aktiengesellschaft, 38436 Wolfsburg (DE)
(72) Erfinder: Lilienthal, Jörg, 38518 Gifhorn (DE)

(56) Entgegenhaltungen:
- EP-A- 0 701 926
- EP-A- 0 738 876
- DE-A- 3 333 176
- DE-A- 4 122 398
- DE-A- 19 712 048
- DE-A- 19 941 975
- US-A- 4 504 913
- US-A- 5 124 924
- US-A- 5 526 481

## Beschreibung

Die Erfindung betrifft ein Navigationssystem gemäß dem Oberbegriff des Patentanspruchs 1.

Navigationssysteme dienen zur Routenberechnung und Zielführung eines Kraftfahrzeuges von einem Startpunkt zu einem gewünschten Zielpunkt. Hierzu umfaßt das Navigationssystem einen Prozessor mit Algorithmen zur Berechnung von Routen mittels der Datenbasis einer digitalen Straßenkarte. Der Startpunkt sowie die jeweils aktuelle Position des Kraftfahrzeuges werden dabei mittels einer Positionserfassungseinrichtung, die beispielsweise als GPS - Empfänger ausgebildet Ist, erfaßt. Auf der Anzeigeeinheit wird dann gesteuert durch den Prozessor ein Ausschnitt der digitalen Straßenkarte dargestellt. Dabei ist es bekannt, daß der Ausschnitt entweder die vollständige Route oder die unmittelbare Umgebung der aktuellen Position des Kraftfahrzeuges darstellt, wobei der Nutzer wahlweise zwischen den Darstellungen umschalten kann.

Aus der DE 197 17 601 A1 ist ein Navigationssystem mit einer Spracherkennungsvorrichtung zum Auswählen einer Mehrzahl von möglichen Worten aus einer großen Anzahl von in einem Wörterbuch gespeicherten Worten bekannt, wobei ein jedes Wort relativ nahe an einem von einer Eingabestimme zu einem Zeitpunkt in ein Mikrophon gesprochenen Wort liegt, zu dem auf eine für ein bestimmtes Steuern der Navigationsvorrichtung erforderliche Eingabe gewartet wird, einer Sprachausgabevorrichtung zum aufeinanderfolgenden akustischen Ausgeben der ausgewählten möglichen Worte in der Form von Fragen, einer zweiten Spracherkennungsvorrichtung zum Auswählen eines möglichen Wortes, das als relativ nahe an einem von einer Antwortstimme in das Mikrophon als Antwort auf die von der Sprachausgabevorrichtung ausgegebene Frage unter den Worten des Wörterbuchs angesehen wird, einer Bewertungseinrichtung, mit der jedesmal, nachdem eines der ausgewählten möglichen Worte von der Sprachausgabevorrichtung akustisch ausgegeben wurde, aufgrund der von der zweiten Spracherkennungsvorrichtung ausgewählten möglichen Worte bewertet, ob das von der Antwortstimme gesprochene Wort mit einem vorbestimmten Wort übereinstimmt, das vorab als Wort mit bejahender Bedeutung eingestellt wurde und einer Steuervorrichtung zum, Durchführen bestimmter Steuerungen der Navigationsvorrichtung unter Verwendung eines der ausgewählten möglichen Worte. Die für das Steuern der Navigationsvorrichtung erforderlichen Daten können beispielsweise Angaben von Positionen als Grundlage für die Navigation, wie Positionen, an denen eine Umgebungskarte aufgerufen werden soll, eine Startposition gespeichert werden soll und Steuerbefehle für verschiedene Funktionen wie Scrolling (Verschiebung der Bildschirmansicht) oder Verändern des Kartenmaßstabes sein. Das Verschieben der Bildschirmansicht bzw. des Ausschnittes der dargestellten digitalen Straßenkarte wird beispielsweise vom Fahrer bzw. Nutzer dazu genutzt, um sich frühzeitig auf Fahrtrichtungsänderungen aufgrund der berechneten Route einzustellen oder um sich in der Umgebung zu orientieren. Nachteilig an dem bekannten Navigationssystem ist, daß die Verschiebung durch Sprachsteuerung sehr schwierig ist, da häufig der Nutzer vor der Verschiebung noch nicht weiß, wie weit dieser den Ausschnitt verschieben will. Dies kann zu häufig notwendigen Korrektureingaben führen.

Ein Navigationssystem mit den Merkmalen des Oberbegriffs des Anspruchs 1 ist aus der DE 40 42 645 C2, der EP 0 738 876 A2 und der WO 99157519 bekannt.

Der Erfindung liegt das technische Problem zugrunde, ein Navigationssystem zu schaffen, das eine verbesserte Verschiebung eines Ausschnittes einer digitalen Straßenkarte ermöglicht.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Durch die Ausbildung der Anzeigeeinheit mit einem Bedienelement, mittels dessen eine Bewegungsrichtung des Ausschnittes der digitalen Straßenkarte eingebbar ist, kann der Nutzer manuell die Bewegung initiieren und steuern, was eine erheblich abgestimmtere Verschiebung erlaubt. Erfindungsgemäß ist die Anzeigeeinheit als Touch - Screen ausgebildet und die Bewegung durch eine gerichtete Berührungsbewegung auf der Anzeigeeinheit durchführbar.

Mittels des Bedienelementes kann mindestens wahlweise eine Bewegung entlang zweier orthogonal zueinanderstehender Richtungen wie beispielsweise links - rechts, oben - unten bzw. Nord - Süd, Ost - West eingegeben werden. Hierzu kann das Bedienelement als Softkey ausgebildet sein, dem die verschiedenen Bewegungsrichtungen zugeordnet sind. Vorzugsweise ist dem Bedienelement darüber hinaus eine Bewegung in Zielrichtung zugeordnet. In einer weiteren bevorzugten Ausführungsform ist die Bewegungsgeschwindigkeit veränderbar, so daß eine Anpaßung in Abhängigkeit von der vermuteten Entfernung vornehmbar ist, um die der Kartenausschnitt verschoben werden soll.

In einer bevorzugten Ausführungsform kann über das Bedienelement auf eine Ausschnittsverschiebung geschaltet werden, die dann direkt auf der Anzeigeeinheit durch eine gerichtete Berührungsbewegung durchführbar ist. Dabei erfaßt der Prozessor die Länge und die Richtung der Bewegung, die als Verschiebungsvektor interpretiert werden kann.

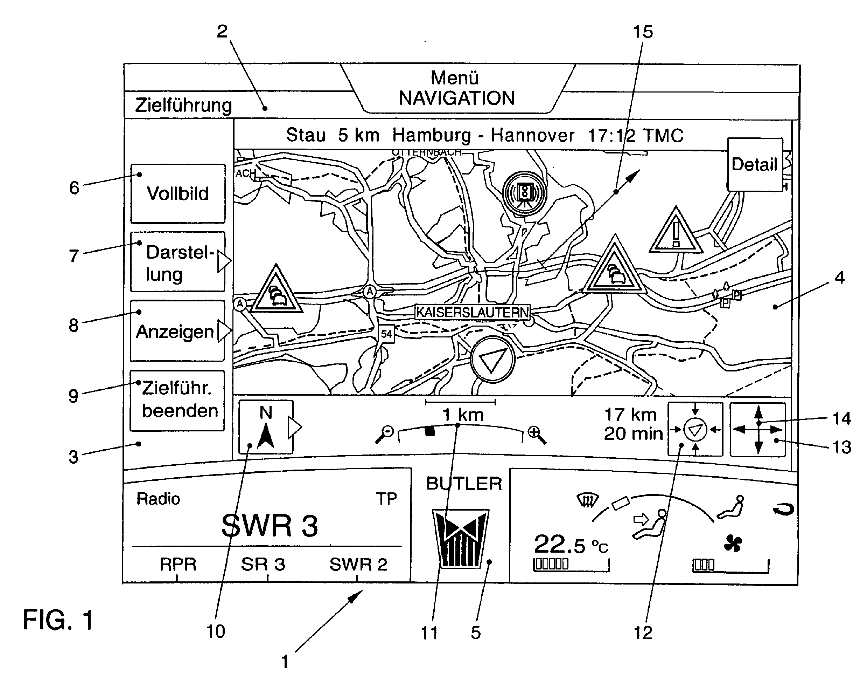

Die Erfindung wird nachfolgend anhand eines bevorzugten Ausführungsbeispiels näher erläutert. Die einzige Figur zeigt eine Anzeigeeinheit eines Navigationssystems mit einem Ausschnitt einer digitalen Straßenkarte,

Die Anzeigeeinheit 1 ist als Touch - Screen ausgebildet und in verschiedene Bereiche unterteilt, nämlich einen Statusbereich 2, einen Bedienbereich 3, eine Darstellung eines Ausschnittes einer digitalen Straßenkarte 4 und einen Permanentbereich 5.

In dem Bedienbereich 3 sind als berührungssensitive Softkeys verschiedenen Bedienelemente 6 - 13 angeordnet. Mittels des Bedienelementes 6 kann der Nutzer einen Ausschnitt der digitalen Straßenkarte 4 aufrufen, der die vollständige Routeführung bis zum Zielpunkt darstellt, wohingegen mittels des Bedienelementes 7 detaillierte Darstellungen aufrufbar sind. Mittels des Bedienelementes 8 sind zusätzliche Informationen wie Verkehrsinformationen, Tankstellen, Raststellen und ähnliches anzeigbar bzw. ausblendbar. Durch das Bedienelement 9 kann die Zielführung beendet und mittels des Bedienelementes 10 die digitale Straßenkarte 4 unterschiedlich geographisch ausgerichtet werden. Das Bedienelement 11 dient zur Einstellung des Kartenmaßstabes, wohingegen Bedienelement 12 die Zielrichtung in Relation zur Kartenausrichtung anzeigt, wobei auch eine Änderung der Kartenausrichtung möglich ist.

Das Bedienelement 13 dient zur Verschiebung des dargestellten Ausschnittes der digitalen Straßenkarte 4. Auf dem Bedienelement 13 ist ein kreuzförmiges Piktogramm 14 mit zwei Doppelpfeilen dargestellt. Je nach Berührung des jeweiligen Pfeiles verschiebt sich die digitale Straßenkarte 4 nach oben, unten, links oder rechts. Des weiteren dient das Bedienelement 13 als Aktivierungselement für eine direkte Verschiebung des Ausschnittes auf der digitalen Straßenkarte 4. Hierzu berührt der Nutzer zunächst das Bedienelement 13, wodurch der Bereich der Anzeigeeinheit 1 mit der digitalen Straßenkarte 4 in einen Ausschnitt - Verschiebungsmodus wechselt. Fährt nun der Nutzer mit dem Finger auf der digitalen Straßenkarte 4 entlang des Pfeiles 15, so erfaßt ein nicht dargestellter Prozessor die Bewegung, setzt diese Bewegung in einen Vektor mit Betrag, Richtung und Orientierung um und verschiebt den Kartenausschnitt um diesen Vektor. Alternativ zu dieser kontinuierlichen Bewegung kann auch vorgesehen sein, daß nur der Anfangs- und der Endpunkt durch einmaliges Berühren festgelegt werden müssen.

## Patentansprüche

1. Navigationssystem, umfassend eine Anzeigeeinheit (1), auf der Ausschnitte einer digitalen Straßenkarte (4) darstellbar sind, wobei der dargestellte Ausschnitt der digitalen Straßenkarte (4) durch den Nutzer bewegbar ist, und wobei die Anzeigeeinheit (1) mit einem Bedienelement (13) ausgebildet ist, mittels dessen eine Bewegungsrichtung des Ausschnitts der digitalen Straßenkarte (4) eingebbar ist
**dadurch gekennzeichnet,**
**daß** die Anzeigeeinheit (1) als Touch - Screen ausgebildet ist und daß die Bewegung durch eine gerichtete Berahrungsbewegung auf der Anzeigeeinheit (1) durchführbar ist.

2. Navigationssystem nach Anspruch 1, **dadurch gekennzeichnet, daß** die Berührungsbewegung kontinuierlich oder mittels diskreter Punkte, die einen Vektor bilden, durchführbar ist.

3. Navigationssystem nach einem der vorangegangenen Ansprüche, **dadurch gekennzeichnet, daß** der Ausschnitt in Zielrichtung bewegbar ist.

4. Navigationssystem nach einem der vorangegangenen Ansprüche, **dadurch gekennzeichnet, daß** die Bewegungsgeschwindigkeit veränderbar ist.

## Claims

1. Navigation system, comprising a display unit (1) which can show details from a digital road map (4), the detail shown from the digital road map (4) being able to be moved by the user, and the display unit (1) being designed to have an operator control element (13) which can be used to input a direction of movement for the detail from the digital road map (4),
**characterized**
**in that** the display unit (1) is in the form of a touchscreen and in that the movement can be performed by a directional touch movement on the display unit (1).

2. Navigation system according to Claim 1,
**characterized in that** the touch movement can be performed continuously or by means of discrete points forming a vector.

3. Navigation system according to one of the preceding claims, **characterized in that** the detail can be moved in the direction of the destination.

4. Navigation system according to one of the preceding claims, **characterized in that** the speed of movement can be varied.

## Revendications

1. Système de navigation qui comprend une unité d'affichage (1) sur laquelle des parties d'une carte routière numérique (4) peuvent être présentées, la partie présentée de la carte routière numérique (4) pouvant être déplacée par l'utilisateur et l'unité d'affichage (1) étant configurée avec un élément de commande (13) qui permet d'introduire une direction de déplacement de la partie de la carte routière numérique (4),
**caractérisé en ce que**
l'unité d'affichage (1) est configurée comme écran tactile et le déplacement peut être réalisé en déplaçant le point de contact de manière orientée sur l'unité d'affichage (1).

2. Système de navigation selon la revendication 1, **caractérisé en ce que** le déplacement du contact peut être réalisé de manière continue ou au moyen de points distincts qui forment un vecteur.

3. Système de navigation selon l'une des revendications précédentes, **caractérisé en ce que** la partie peut être déplacée dans la direction visée.

4. Système de navigation selon l'une des revendications précédentes, **caractérisé en ce que** la vitesse de déplacement est modifiable.
